# EUROPEAN PATENT APPLICATION

(11) **EP 3 889 840 A1**
(43) Date of publication of application: **06.10.2021**
(21) Application number: 20167174.0
(22) Date of filing: 31.03.2020
(51) Int. Cl.: G06N 3/04, G06N 3/08, G06N 7/00, G06N 3/00, G05B 13/02

(54) **A RECOMMENDER SYSTEM AND METHOD FOR RECOMMENDING A SETTING OF AN ADJUSTABLE PARAMETER**

(71) Applicant: Siemens Aktiengesellschaft, 80333 München (DE)
(72) Inventor: Büttner, Florian, 81541 München (DE); Hepp, Patrick, 76149 Karlsruhe (DE); Yang, Yinchong, 85579 Neubiberg (DE); Lohmeyer, Robert, 80469 München (DE)

(57) **Abstract**

The invention refers to a recommender system and method for recommending a setting of an adjustable parameter of an object for an application. For example, the object can be a device of a plant and the application corresponds to an operating state of the plant. The adjustable parameter can be a configuration parameter which requires a certain setting depending on the operating state of the plant. The invention suggests a method based on a machine learning approach to recommend such a setting, even in case of a previously unknown operating state.

## Description

The invention relates to a recommendation method and system for recommending a setting or value of an adjustable parameter of an object for an application of the object. For example, the object can be a device of a plant wherein the application corresponds to an operating state of the plant. The recommended setting of the adjustable parameter is specific for the particular object and for the considered application.

Specific setting of adjustable parameters of certain objects and for particular applications or situations often requires domain knowledge as well as the consideration of big amounts of data. Especially, as a first example, the settings of configuration parameters of devices of a technical plant depend on the nature of the particular device itself an on an actual operating state of the plant. As soon as a new operating state is applied or, even more complicated, shows up, e.g. a new error state, the configurations of the devices would have to be adapted. Due to the complexity of such plants, the decision about which settings have to be applied for which device is a complicated task which has to be automatic to fulfill the requirement of fast and automatic implementation of the settings. As a second example taken from a business environment, customer and product specific adaption of business transactions requires domain knowledge that often involves years of training and experience and knowledge about product features. It becomes even more challenging as the data collected from customers and transactions increase in both quantity and complexity. Currently, decisions about business transactions require extraction and evaluation of known, historic data from source systems. Once these historic data are prepared in a suitable way, new data have to be considered additionally, based on experience and anticipation of future transactions. All this information often has not full transparency and depends on the individual knowledge of a persons involved in such transactions. Moreover, for example pricing decisions usually do not follow any predetermined rules or analytical processes but are rather based on individual behavior and are therefore not transparently reproduceable.

Therefore, a decision support system is required which serves the need to recommend the required settings automatically, accurately, and fast. This is solved by the method suggested in claim 1, by the recommender system as per claim 14, and by a control unit as described in claim 15.

A computer implemented recommendation method RM is suggested for providing a recommended setting S for an adjustable parameter PA, for example to be applied for a device DEV of a plant in a given operating state OS, i.e. the adjustable parameter has a certain value which can be adjusted such that said value corresponds to the recommended setting S. Another application could be the setting or value of a certain purchase feature for a product to be purchased by a customer. In particular, in a first step of the recommendation method RM input data DI is received comprising at least a first DIS1, a second DIS2, and a third input data set DIS3. The third input data set DIS3 corresponds to a third type TDS3 of data sets and includes the parameter PA to be adjusted, i.e. information about which parameter is to be adjusted, but -to be sufficiently clear- not its setting or value itself. The second input data set DIS2 corresponds to a second type TDS2 of data sets and includes an object O for which the parameter PA is to be adjusted, e.g. a specific device DEV or product P, and the first input data set DIS1 corresponds to a first type TDS1 of data sets and includes an application A of the object O, e.g. an actual operating state of the plant the device DEV is integrated in or a customer who intends to purchase the product P. The recommendation method RM comprises a preparation step PS and a subsequent recommendation step RS, wherein the recommendation step RS provides as an output the recommended setting S of the adjustable parameter PA. Therein, the recommendation method RM applies a recommender system using a machine learning process preferably based on a collaborative filtering approach which utilizes the input data DI to calculate the recommended setting S as the output.

For example and according to the embodiments mentioned above and introduced in detail below, the application A can be an operating state OS of a plant, e.g. a production facility, and the object O, in that case, can be a device DEV of the plant. In another embodiment, the object O can be a product P to be purchased by a customer C and the application A would be, in that case, that particular customer C.

Thus, the recommender system can be designed based on a collaborative filtering approach, where preferences are predicted by modelling interactions between first and second types of data sets, e.g. between the first and the third and/or the first and the second input data set.

One respective first object for one dedicated application can be, for example, characterized by a plurality of adjustable parameters with certain settings. A second object for the same dedicated application can be, but does not necessarily have to be, characterized by the same adjustable parameters. In any case, the settings of those parameters which are applied both to characterize the first object and to characterize the second object for the same application can have the same or different settings.

The preparation step PS applies a representation learning RL concept to produce an output DI' from the input data DI and/or the recommendation step RS applies a predictive modeling concept on the output DI' of the preparation step PS to calculate the recommended setting S as the output of the recommendation method RM. The rationale is the fact that especially the raw features to describe an operating state or a customer, a device or a product group can be sparse and high-dimensional and therefore only limitedly efficient, but nevertheless functional, to serve as input to predictive models. This is overcome by the representation learning approach.

It should be clear that the choice of approach for the preparation step is independent from the choice of approach for the recommendation step.

In that context, the recommendation method RM is a combination of a multi-output Gaussian process GP in the recommendation step RS with the representation learning RL concept, preferably for collaborative filtering via matrix decomposition, in the preparation step PS.

In more detail, the recommendation method RM for providing the recommended setting S applies in the recommendation step RS a previously generated first artificial neural network ANN1, wherein the input data DI or alternatively and preferably representations DI' of the input data DI are processed in the recommendation step RS of the recommendation method RM to calculate the recommended setting S. Thus, the calculation of the recommended setting S is executed in the recommendation step RS by means of the first artificial neural network ANN1 which allows for accurate and reliable recommendations S, tailored to the specific situation.

Preferably, in the recommendation step RS a Gaussian process is applied by the first artificial neural network ANN1 to calculate the recommended setting S, which is a further improvement to achieve accurate and reliable recommendations S.

In the preparation step PS, each one of the first DIS1, the second DIS2, and the third DIS3 input data sets of the input data DI is processed to calculate a corresponding first DIS1', second DIS2', and third DIS3' latent representation of the respective first DIS1, second DIS2, and third DIS3 input data sets. ,I.e. in the preparation step the first latent representation DIS1' is formed from the first input data set DIS1, the second latent representation DIS2' is formed from the second input data set DIS2, and the third latent representation DIS3' is formed from the third input data set DIS3. The first DIS1', the second DIS2', and the third DIS3' latent representations are used as the representations DI' of input data DI in the recommendation step RS of the recommendation method RM to calculate the recommended setting S. I.e. in the recommendation step RS each one of the first DIS1', the second DIS2', and the third DIS3' latent representations is processed as respective representation of the input data to calculate the recommended setting S, wherein the calculation of the recommended setting S is executed by means of the first artificial neural network ANN1.

Therein, the calculations of the latent representations DISk' of the input data sets DISk in the preparation step PS with k=1, 2, ...N_DIS and with N_DIS corresponding to the number of input data sets DIS are executed by means of a previously generated second artificial neural network ANN2.

For the generation and training of the first artificial neural network ANN1 before the application of ANN1 for the calculation of the recommended setting S a previously generated parameter database PDB1 is used. The parameter database PDB1 is -for example- representable as a multi-dimensional tensor, including at least a first, a second, and a third dimension, with the third dimension z according to the third type TDS3 of data sets and adjustable parameters PA, respectively, the second dimension y according to the second type TDS2 of data sets and objects O, respectively, for which the parameters PA are adjustable, and the first dimension x according to the first type TDS1 of data sets and applications A of the objects O, respectively. An entry at particular (i) coordinates xi, yi, zi in the tensor PDB1 represents a previously known setting S(xi,yi,zi) of a particular adjustable parameter zi=PA for a particular second input data set yi=O and for a particular first input data set xi=A.

Preferably, a tensor decomposition model is applied on the parameter database PDB1. Since, for example, a specific customer C is often only interested in a small cluster of products, the advantage of this decomposition approach lies in its ability to handle the corresponding high sparsity in the tensor PDB1 quite efficiently.

The generation of the first artificial neural network ANN1 includes a training phase with one or more training loops LT(i), during which ANN1-parameters, e.g. weights etc., which define the behavior of the first artificial neural network ANN1 as a response to an input are adjusted. In each training loop LT(i), known input information representing a particular known first input data set DIS1, a particular known second input data set DIS2, and a particular known adjustable parameter DIS3=PA are selected. The selected known input information DIS1, DIS2, DIS3 is provided as input training data to the first artificial neural network ANN1. The first artificial neural network ANN1 is subsequently trained utilizing on the one hand the selected known input information representing the input training data and on the other hand a particular known entry S(A,O,PA) in the parameter database PDB1 according to the selected known input information, i.e. the selected particular known first input data set application A, the selected particular known second input data set object O, and the selected particular known adjustable parameter PA. The particular known entry S(A,O,PA) represents an aspired output of the first artificial neural network ANN1 when processing the particular input training data.

In more detail, in each step of the training phase of the first artificial neural network ANN1 the first artificial neural network ANN1 iteratively processes the provided input training data and adjusts the ANN1-parameters to calculate an output based on the provided input training data and on the actual adjusted ANN1-parameters until such output of the first artificial neural network ANN1 matches best with the particular known entry S(A,O,PA) in the parameter database according to the selected particular known first input data set (in the following occasionally named "first variable), the selected particular known second input data set (in the following occasionally named "second variable"), and the selected particular known adjustable parameter PA, i.e. according to the selected training data.

The particular first input data set DIS1, the particular second input data set DIS2, and the particular adjustable parameter DIS3=PA are preferably selected in the training phase only in combinations (A,O,PA) with each other for which a particular setting S(DIS1,DIS2,DIS3) is known and available in the parameter database and which have, correspondingly, a concrete representation in the parameter database. In other words, in case of a combination Aa, Ob, Sc for which a setting of the adjustable parameter is not available and not known in the parameter database, such combination is not used for training the first artificial neural network ANN1.

For the generation and training of the second artificial neural network ANN2 before the application of ANN2 for the calculation of the latent representations DI' a previously generated further parameter database PDB2 is used, wherein the further parameter database PDB2 is -for example- representable as an at least two-dimensional tensor. The database PDB2 includes for each type TDSk of data sets a first dimension according to the respective type TDSk of data sets, such that input data sets DISk according to the respective type TDSk of data sets are listed along the first dimension, and a second dimension according to latent features of the respective type TDSk of data sets. Thus, a series of entries in the further parameter database PDB2 assigned to and according to a particular input data set DISk provides a latent representation DISk' of that known input data set DISk.

Therein, the further parameter database PDB2 can be a common database for all types TDSk of data sets or it can be understood as an umbrella term for a number N_DIS of sub-databases, wherein each sub-database contains the data and entries, respectively, for one of the types TDSk of data sets. Consequently, such a sub-database could be two-dimensional with the first and second dimension as described above.

The generation of the second artificial neural network ANN2 includes a training phase with one or more training loops LT2(i) for each one of the types TDSk of data sets during which ANN2-parameters, e.g. weights etc., which define the behavior of the second artificial neural network ANN2 as a response to an input are adjusted. In each training loop LT2(i) for a type TDSk of data sets known input information representing a particular known input data set DISk from the respective type TDSk of data sets is selected and the selected known input information DISk is provided as input training data to the second artificial neural network ANN2. The second artificial neural network ANN2 is trained utilizing on the one hand the selected known input information DISk representing the input training data and on the other hand a particular known series of entries in the second parameter database PDB2 according to and assigned to the selected known input information DISk, i.e. the selected particular known first input data set application A, the selected particular known second input data set object O, and the selected particular known adjustable parameter PA. The particular known series of entries represents an aspired output DISk' of the second artificial neural network ANN2 when processing the particular input training data DISk.

In more detail, in each step of the training phase of the second artificial neural network ANN2 the second artificial neural network ANN2 iteratively processes the provided input training data DISk, i.e. the selected known characterizing combination of first or second features, respectively, and adjusts the ANN2-parameters to calculate an output DISk' based on the provided input training data DISk and on the actual adjusted ANN2-parameters until such output DISk' of the second artificial neural network ANN2 matches best with the latent representation DISk' previously provided for the input training data DISk provided in that particular step of the training phase for the respective type TDSk of data sets. The particular meanings of "until" and "matches best" in this context have been explained earlier and are applicable here as well.

Preferably, the generation and training of the second artificial neural network ANN2 is based on a representation learning approach.

A corresponding recommender system for providing a recommended setting S for an adjustable parameter PA of an object O for an application A, comprises a computer configured to execute the recommendation method described above.

For example, a control unit of a plant which can be operated in a plurality of operating states OS can be configured to control settings S(OS,DEV,CP) of configuration parameters CP of devices DEV of the plant, wherein the setting S(OS,DEV,CP) of a particular configuration parameter CP of a particular device DEV depends on an actual operating state OS of the plant. The control unit can be configured to execute the recommendation method RM as described above to determine a recommended setting S(OS,DEV,CP) of the parameter CP of the device DEV for the actual operating state OS, wherein the configuration parameter CP of a device DEV corresponds to the adjustable parameter PA, the device DEV corresponds to the object O, and the operating state OS corresponds to the application A.

The invention is based on data analytics and machine learning. In an automated fashion, the solution recognizes common patterns from existing data sources in at least a first and a second variable. The machine learning model draws the correlation between these variables. In comparison with a naive machine learning setting, the proposed model is more efficient in terms of less trainable parameters and thus less prone to over-fitting. In addition, the model is able to handle a large fraction of missing values and can therefore be fitted based on a larger data base than simple models which require extensive filtering or inefficient imputation steps. The model can also provide interpretability of its prediction, encouraging the usability in production.

The recommender system is designed based on a collaborative filtering approach, where preferences are predicted by modelling interactions between first and second variables. Such approaches to solve the collaborative filtering task can be based on learning representations of users and items. This ranges from matrix factorization approaches such as non-negative matrix factorization, or Gaussian process latent variable models for learning vector representations, to neural-network based embeddings of the first and second variables. In particular, recent advances in using neural-network based approaches have resulted in scalable solutions with unprecedented predictive power. One major drawback of using such approaches is that they do not model predictive uncertainties. However, in this invention
a novel approach is proposed combining the representation learning paradigm of collaborative filtering with multi-output Gaussian processes in a joint framework to generate uncertainty-aware
recommendations. This results in a model that scales to very large and sparse datasets, achieving competitive performances in terms of classical metrics quantifying the reconstruction error. In addition to accurately predicting and recommending, respectively, a value or setting as introduced above, the model also provides meaningful uncertainty estimates about that recommendation.

It is to be understood that the elements and features recited in the appended claims may be combined in different ways to produce new claims that likewise fall within the scope of the present invention. Thus, whereas the dependent claims appended below depend from only a single independent or dependent claim, it is to be understood that these dependent claims can, alternatively, be made to depend in the alternative from any preceding or following claim, whether independent or dependent, and that such new combinations are to be understood as forming a part of the present specification.

### DESCRIPTION OF THE FIGURES

In the following, possible embodiments of the different aspects of the present invention are described in more detail with reference to the enclosed figures. The objects as well as further advantages of the present embodiments will become more apparent and readily appreciated from the following description of the preferred embodiments, taken in conjunction with the accompanying figure in which:
- FIG. 1: shows a hierarchically layered architecture of manufacturing control in an industrial automation domain;
- FIG 2: shows a parameter database PDB1;
- FIG 3: shows a flow chart of the recommendation method RM in a simple implementation;
- FIG 4: shows a flow chart of the recommendation method RM in a sophisticated implementation;
- FIG 5: shows the operation of the second network ANN2;
- FIG 6: shows a different visualization of the operation of the second network ANN2;
- FIG 7: shows a flow chart of a loop of the iterative training process of the first and second network ANN1, ANN2;
- FIG 8: shows a further visualization of the recommendation method.

### DETAILED DESCRIPTION

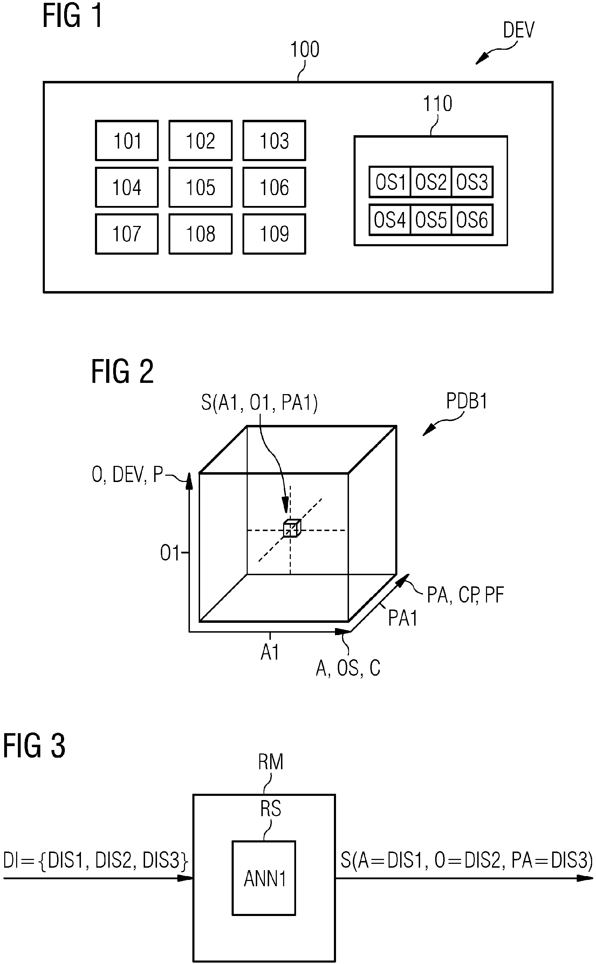

Figure 1 shows a first exemplary embodiment for which the invention might be applied. A technical plant 100, for example a production facility, comprises a plurality of devices 101-110 which are utilized to produce a product. For example, the devices 101-103 are device controllers, the devices 104-106 are motors, and the devices 107-109 are pumps. Furthermore, one 110 of the devices 101-110 can be a central control unit 110 of the plant 100 for controlling the other devices 101-109.

It should be clear that this particular selection of devices 101-110 is only exemplary and introduced in this limited scope for the sake of brevity of the description. A realistic technical plant would comprise significantly more devices and a broader bandwidth of device types than introduced above to achieve its technical purpose, e.g. to produce a product. However, the limited scope of introduced devices and device types "motor", "pump", and "controller" is sufficient to explain the invention and can be scaled up easily to a realistic technical plant by a person skilled in the art without deviating from the invention. Besides that, it should be clear that the arrangement of devices 101-110 in figure 1 is only a symbolic presentation but does not represent the realistic arrangement of devices in a plant.

The plant 100 can operate in various known operating states OS, for example a first normal operating state OS1, e.g. to produce a first product, a second normal operating state OS2, e.g. to produce a second product, a maintenance state OS3, a shutdown state OS4, a first error condition state OS5, and a second error condition state OS6. The operating states OS1-OS2 are shown in FIG 1 to be integrated in the central control unit 110 to illustrate that the central control unit 110 can be, but doesn't have to be, configured to observe and/or setup the operating states OS of the plant 100. The known error conditions might differ in the error scenarios, e.g. with regard to particular devices DEV which might be damaged under the error conditions. For example, in the first error condition state a certain pump 108 of the production plant 100 might be damaged, while in the second error condition the operation of a particular motor 103 could be erroneous.

In a realistic scenario, not only two error condition states and not only two normal operating states might be imaginable, but a plurality of such states. This typically depends on the complexity of the plant 100 and its devices 101-110 etc. However, the limited scope of introduced operating states OS is again sufficient to explain the invention and can be scaled up easily to a realistic scenario by a person skilled in the art without deviating from the invention.

In different operating states OS of the plant 100 each one of the devices 101-110 of the plant 110 can be operated with different known configurations, wherein a particular configuration of a particular device DEV1 is selected depending on the actual operating state OS of the plant 100 and is correspondingly implemented, for example, by the central control unit 110.

For example, in case of the particular device DEV1 being an electric motor, the configuration of the motor can include one or more adjustable configuration parameters PA1 like an on/off state, a torque, a maximum rotational speed, a maximum operation temperature, a minimum power output, a maximum power output etc. Therein, for each configuration parameter PA a particular value or setting S, respectively, is known, possibly from experience from the commissioning phase of the plant 100. However, those values or settings S might be different under different operating states OS of the plant 100. For the sake of brevity, in the following only the term "setting" will be applied instead of "setting or value".

Just for example, with regard to motor 103 and in case of the operating state OS being the first normal operating state, the setting of the configuration parameter "on/off state" might be "on" and the setting of the configuration parameter "maximum operation temperature" might be 90°C. For the same device 103, the setting of the configuration parameter "on/off state" might still be "on" in the first error condition state, but the setting of the configuration parameter "maximum operation temperature" might then be reduced to 50°C, for example.

All the different known scenarios and operating states OS, respectively, can be utilized to build up a parameter database PDB1 which can have, for example, the form of a multi-dimensional tensor. The tensor includes a first x, a second y, and a third dimension z with the third dimension z in general according to adjustable parameters PA, i.e. in the first embodiment to the configuration parameters PA=CP of the devices 101-110, the second dimension y in general according to a second variable O for which the parameters PA=CP are adjustable, i.e. in the first embodiment according to the devices DEV, 101-110, i.e. O=DEV, and the first dimension x in general according to a first variable A, i.e. representing the operating states OS of the plant 100 in the embodiment presented above, i.e. A=OS. The database PDB1 is shown in FIG 2.

Thus, in general an entry S at particular coordinates x0, y0, zO in the tensor PDB1 represents a previously known setting (or value) S(x0,y0,z0) of a particular adjustable parameter z0=PA1 for a particular second variable y0=O1 for a particular first variable x0=A1. In other words and with regard to the first embodiment and to the exemplary situation of motor 103 mentioned above, in case x0=OS1 stands for "first normal operating state", y0=DEV represents motor 103, and z0=CP means the "maximum operation temperature", then the entry of the tensor and database PDB1 at S(A1,O1,PA1) would be S(A1,O1,PA1)=90°C. Correspondingly, the parameter database PDB1 comprises entries S for all known combinations of operating states A=OS, devices O=DEV, and configuration parameters PA=CP of the devices 101-110 with each entry S representing a setting or value of the respective configuration parameter CP.

The data available in the parameter database PDB1 can be utilized to realize a recommendation method RM for providing a recommended setting for the adjustable configuration parameter PA=CP, as will be explained later. Before that, a second embodiment and application opportunity, respectively, of the invention shall be described. After that, the recommendation method RM will be illustrated in a general way which is applicable for both the first and the second embodiment.

As described in more detail above, in the first exemplary embodiment of the invention the first variable A=OS can represent a plurality of operating states of the technical plant 100 as depicted in FIG 1. The second variable O=DEV can represent a plurality of devices of the plant 100 for which the operating state is represented in the first variable OS. The adjustable parameters PA can be configuration parameters CP of the devices DEV of the second variable O. I.e. the entries S in the tensor and in the parameter database PDB1, respectively, are the settings of those adjustable parameters PA=CP wherein the parameter database PDB1 preferably comprises settings for each individual device DEV. However, it is clear that the invention can be applied in numerous applications besides the one explained in the context of the first exemplary embodiment. In the second embodiment of the invention, which is again only another example for an application of the invention, the first variable A can represent a plurality of customers C of certain products P, i.e. A=C, wherein a plurality of such products P is represented by the second variable O, i.e. O=P. The adjustable parameters PA can then be purchase features PF, i.e. PA=PF, which describe conditions of a purchase of a product P by a customer C.

I.e. the corresponding tensor and parameter database PDB1, respectively, would again be three-dimensional with the customers C1, C2, C3, ..., Cmax listed along the first dimension A and x, respectively, the products P1, P2, P3, ..., Pmax listed along the second dimension O and y, respectively, and the purchase features PF1, PF2, PF3, ..., PFmax listed along the third dimension PA and z, respectively. This is considered in FIG 2 as well. A particular entry S(Ci,Pj,PFl) of the tensor PDB1 with 1≤i≤Cmax, 1≤j≤Pmax, and 1≤l≤PFmax would describe the setting or value of the corresponding particular purchase feature PFl for the corresponding particular product Pj for the corresponding particular customer Ci. For example, one of the purchase features PF might be the final price of a product P for a certain customer C wherein the final price might be differing from the original recommended retail price for that product P. I.e. the final price PFl might be the result of negotiations between the particular customer Ci and the provider of the product Pj and might include a corresponding discount. Alternatively, instead of the final price one of the purchase features PF might represent the achieved discount instead of the final price. Thus, in case the purchase feature PFl represents such a discount, the particular entry S(Ci,PGj,PFl) represents the discount, e.g. in EUR or USD or in %, granted to customer Ci for the purchase of the product Pj. Other purchase features might be, for example, a purchase frequency, an amount of particular purchased products, a time interval of purchases etc.

As a summary of the above, both in the first and in the second embodiment a three-dimensional parameter database PDB1 is available which includes data known from experience, from commissioning phases, from earlier deals, from maintenance activities etc. Of course, the database PDB1 might have more or less dimensions, depending on the underlying application.

The availability of the respective database PDB1 in the first and in the second embodiment, respectively, each time allows in a simple approach to recommend a suitable value or setting S of a certain adjustable parameter PA1 for a certain device O1=DEV1 in a certain operating state A1=OS1 in the first embodiment or for a certain product O1=P1 for a certain customer A1=C1 in the second embodiment, in case such a combination A1, O1, PA1 has been applied earlier so that the particular setting S(A1,O1,PA1) is already available in the database PDB1.

However, in case a setting S of a configuration parameter PA is required for a combination of operating state A, device O, and configuration parameter PA which has not yet been determined, i.e. for which the parameter database PDB1 does not have an explicit entry S, a recommendation method RM as depicted in FIG 3 can be applied to recommend such a setting, wherein the recommendation method RM is based on a machine learning approach which utilizes a previously generated and suitably trained first artificial neural network ANN1 and preferably a previously generated and suitably trained second artificial neural network ANN2. In the following, the "first artificial neural network ANN1" and the "second artificial neural network ANN2" will occasionally be named "first network ANN1" and "second network ANN2", respectively, for the sake of brevity.

Such a situation in which a combination of A, O, and PA is applicable for which the parameter database PDB1 does not have an explicit entry S, might occur simply because that specific combination of A, O, and PA has not yet been implemented. However, that situation might also occur in various scenarios, for example in the first embodiment because a previously unknown operating state OS emerges or because a new device DEV has been integrated in the plant 100, and for example in the second embodiment because a new customer C wants to purchase a product P or because a new product P is offered which has not been available before.

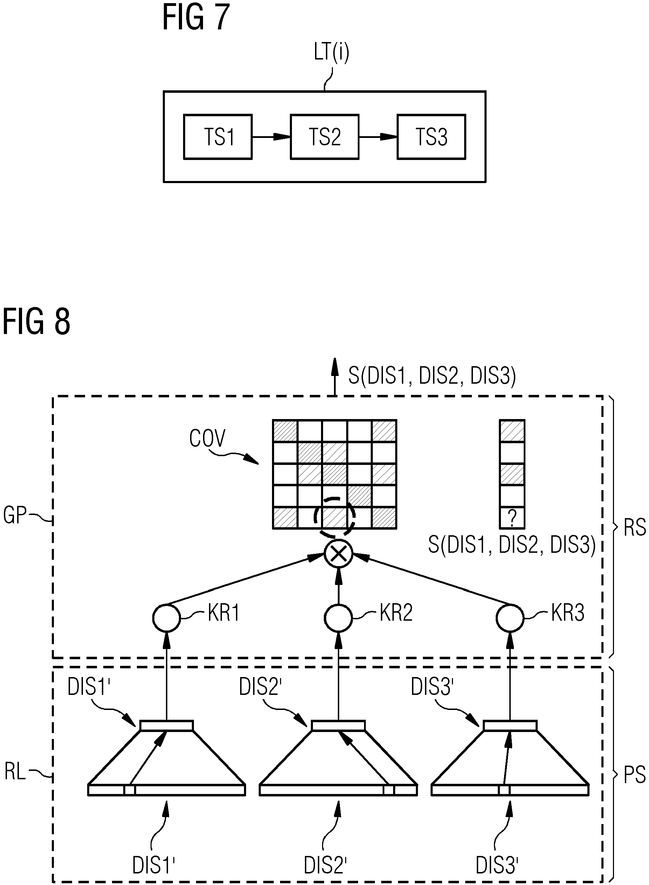

For the purpose of recommending a suitable setting S(A,O,PA) of the parameter PA in such a situation of an unknown combination of A, O, and PA, the first artificial neural network ANN1 is provided and trained based on the existing, previously known parameter database PDB1. The training phase of the first network ANN1 will be described below in connection with FIG 7. With such a trained artificial neural network ANN1 being available, the recommendation method RM of FIG 3 for providing the recommended setting S(A,O,PA) for the adjustable parameter PA is available. For example, the method RM can be implemented in the central control unit 110 of the plant 100 in the first embodiment and in a regular computer of the company offering the products P in the second embodiment. As depicted in FIG 3, a recommendation step RS of the recommendation method RM starts with the method RM receiving as input data DI at least a first DIS1, a second DIS2, and a third input data set DIS3, i.e. DI={DIS1, DIS2, DIS3}. The first input data set DIS1 represents the first variable A, i.e. in the first embodiment the actual operating state DIS1=A=OS of the plant 100 and in the second embodiment the customer DIS1=A=C requesting a product P. The second input data set DIS2 represents the second variable O, i.e. in the first embodiment the device DIS2=O=DEV for which a configuration parameter CP=PA shall be adapted and in the second embodiment the product DIS2=O=P requested by the customer C. The third input data set DIS3 represents the particular parameter PA to be adjusted, i.e. in the first embodiment the particular configuration parameter DIS3=PA=CP for which a setting is sought and in the second embodiment the purchase feature DIS3=PA=PF for the purchase of the product P by the customer C.

In general terms, the third input data set DIS3 corresponds to a third type TDS3 of data sets and includes the parameter PA to be adjusted, i.e. information about which parameter is to be adjusted, but -to be sufficiently clear- not its setting or value itself. The second input data set DIS2 corresponds to a second type TDS2 of data sets and includes an object O for which the parameter PA is to be adjusted, e.g. a specific device DEV. The first input data set DIS1 corresponds to a first type TDS1 of data sets and includes an application A of the object O, e.g. an actual operating state of the plant the device DEV is integrated in.

The recommendation method RM and especially the artificial neural network ANN1, respectively, processes the input data DI and consequently provides as an output the recommended setting S(A=DIS1,O=DIS2,PA=DIS3) of the parameter PA to be adjusted. With this output the recommendation step RS and with it the recommendation method RM ends.

This recommendation of the setting S(A,O,PA) makes use of the trained network ANN1, wherein the described recommendation method RM realizes a recommender system using a machine learning process preferably based on a collaborative filtering approach which utilizes the input data DI to calculate the recommended setting S(A,O,PA) as the output. Especially, the machine learning process and the first artificial neural network ANN1, respectively, applies a Gaussian process which could also be applied in the training phase of the first network ANN1.

In other words, the machine learning process and recommendation method RM, respectively, for calculating the recommended setting S(A,O,PA) utilizes the previously generated first artificial neural network ANN1, wherein the input data DI are processed in the recommendation method RM to calculate the recommended setting S(A,O,PA), wherein the calculation of the recommended setting is executed in the recommendation step RS by means of the first artificial neural network ANN1 as described above.

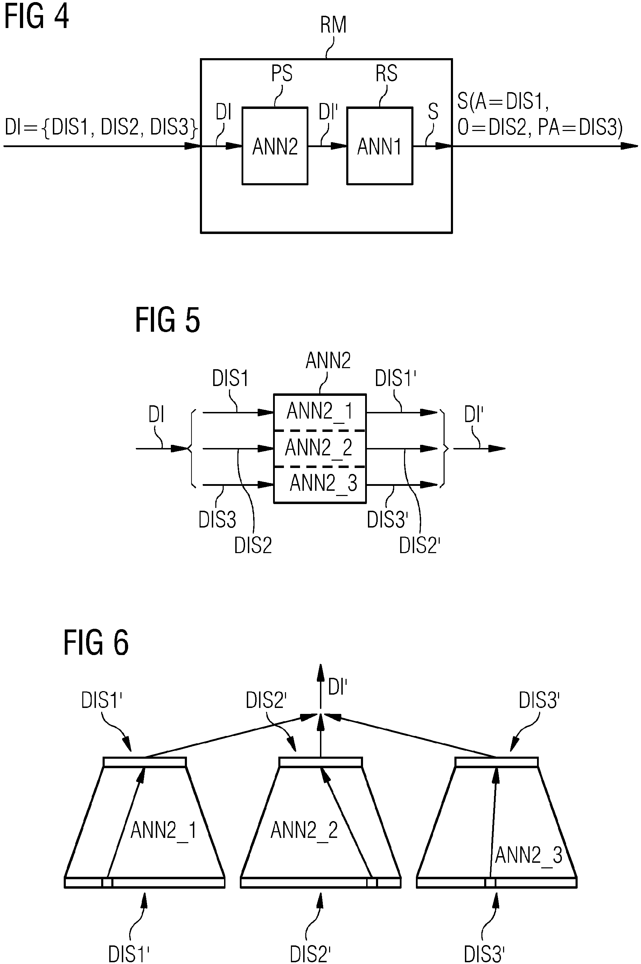

In a preferred approach which is depicted in FIG 4, not the original input data DI as such but latent representations DI' of the input data DI and its input data sets DIS1, DIS2, DIS3 are processed in the recommendation step RS of the recommendation method RM to calculate the recommended setting S(A,O,PA). Such latent representations DIS1', DIS2', DIS3' of the input data sets DIS1, DIS2, DIS3 are determined in a preparation step PS of the recommendation method RM which is executed before the recommendation step RS of the recommendation method RM.

In the preparation step PS, each one of the first DIS1, the second DIS2, and the third DIS3 input data sets is processed to calculate a corresponding first DIS1', second DIS2', and third DIS3' latent representation of the respective first DIS1, second DIS2, and third DIS3 input data set. I.e. in the preparation step the first latent representation DIS1' is formed from the first input data set DIS1, the second latent representation DIS2' is formed from the second input data set DIS2, and the third latent representation DIS3' is formed from the third input data set DIS3. Subsequently, the first DIS1', the second DIS2', and the third DIS3' latent representation are used as the representations DI' of input data DI in the recommendation step RS, wherein in the recommendation step RS each one of the first DIS1', the second DIS2', and the third DIS3' latent representations is processed as respective representation of the input data DI to calculate the recommended setting S(A,O,PA). Therein, the calculation of the recommended setting is again executed by means of the first artificial neural network ANN1 as described above.

The determinations of the latent representations DIS1', DIS2', DIS3' in the preparation step PS are executed in the preparation step PS by means of the previously generated second artificial neural network ANN2. I.e. an input data set DIS1, DIS2, and DIS3, respectively, is used as an input for the second network ANN2 and the second network ANN2 subsequently provides a corresponding latent representation DIS1', DIS2', or DIS3', respectively. In other words, the artificial neural network ANN2 processes the input data DI and input data sets DIS1, DIS2, DIS3, respectively, and consequently provides as an output the latent representation DI' of the input data DI and the latent representations DIS1', DIS2', DIS3', respectively, which is then provided to and further processed in the recommendation step RS via the first network ANN1 as described above to determine the recommended setting S(A,O,PA) .

The operation of the second network ANN2 is explained in connection with FIG 5. Since the input data sets DIS1, DIS2, DIS3 are independent of each other, the second artificial neural network ANN2 might consist of or comprise a number N_ANN2 of independent artificial neural networks ANN2 k with k=1,2,...N_ANN2 wherein N_ANN2=N_DIS corresponds to the number N_DIS of input data sets DIS. Thus, in the described embodiment N_ANN2=3 is applicable. Each one of the independent artificial neural networks ANN2_k can be trained separately as described below. However, it would also be possible to realize the preparation step PS with a common or collective second artificial neural network ANN2 instead of independent artificial neural networks ANN2_k. In that case, ANN2 would be trained as a whole.

For example, the input data sets DIS1, DIS2, DIS3 might be available as one-hot vector representations of the underlying information A, O, PA. I.e. DIS1 would be a one-hot vector representation of, for example, the first normal operating state in the first embodiment and a certain customer C1 in the second embodiment. DIS2 would be a one-hot vector representation of, for example, the motor 103 in the first embodiment and a certain product P1 in the second embodiment. DIS3 would be a one-hot vector representation of, for example, the configuration parameter "maximum operation temperature" in the first embodiment and a certain purchase feature PF1 in the second embodiment, for instance a discount. The second network ANN2 produces the latent representations DIS1', DIS2', DIS3' out of these one-hot vectors.

FIG 6 shows the operation of the second network ANN2 in a different visualization in which the input data sets DIS1, DIS2, DIS3 are visualized as one-hot vectors.

As an alternative example, one or more of the input data sets DIS1, DIS2, DIS3 can be provided in the form of a feature vector instead of a one-hot vector. In contrast to the architecture based on one-hot vectors, the first input to the second network ANN2 is no longer a one-hot vector of the operating state or customer, but rather a feature vector so that DISk' can no longer be interpreted as latent vectors, but rather as a product of a mapping function from the feature space of the first variable, i.e. of the operating state or the customer, to the same latent space of DISk'. For example, an operating state or a customer might be better described by a set of features which includes typical characteristics of such an operating state or customer, respectively. In case a new, unknown operating state appears, such new operating state would be characterized by a set of features which would at least in parts be similar to a set of features of a previously known operating state. The same applies for a new customer which can be characterized by certain features like a company type or legal form (GmbH, AG, ltd., plc., etc.), branch (public sector, automotive, etc.), pricing role (OEM, end-customer, etc.), etc. which can be provided for every customer, and also to a certain extent to "devices" in the first embodiment and "products" in the second embodiment. The usage of feature vectors as input data sets DIS for the preparation step PS is especially advantageous in case the data type which is represented by the corresponding input data set DIS can hardly be generalized. Consequently, the second network ANN2 or one of its corresponding sub networks ANN2_k which has then been trained based on the feature vectors of the known operating states and customers, respectively, would be able to determine a latent representation DIS' of the new operating state and customer, respectively, with high accuracy. Thus, the availability of the trained second network ANN2 advantageously allows to determine a suitable latent representation DIS1', DIS2', or DIS3', even out of an unknown input data set DIS1, DIS2, or DIS3, which can then be further processed in the recommendation step RS as explained above.

Of course, the input data sets DIS might also be available in other suitable data formats besides feature vectors or one-hot vectors.

The availability if the trained first and second networks ANN1, ANN2 allows for determination of a suitable setting S of a particular adjustable configuration parameter PA for a particular device O and product P, respectively, in a desired or given operating state A or for a certain customer C, respectively, even if the operating state or customer has not been known before. The same is applicable, for example, in the first embodiment in case a new device has been integrated in the plant 100 and a suitable setting of a certain configuration parameter of that new device has to be found or in the second embodiment when a new product should be offered to a known or even unknown customer. The recommendation method RM to determine such a suitable setting S shall be summarized in the following with regard to FIG 4 and based on the first embodiment with the example of the new operating state. The same process would, however, be applied in the case of finding a suitable setting S with a new device and in any case of the second embodiment as well.

As soon as a new operating state A' is detected or applied with the plant 100, for example a third normal operating state, and a suitable setting of a configuration parameter PA=CP, for example CP="maximum operating temperature" (MOT), of a particular device 0(103), for example the motor 103, is needed, the corresponding input data sets DIS1 for the new operating state A', DIS2 for the motor 103, and DIS3 for the maximum operating temperature MOT of motor 103 are provided, for example as one-hot vectors and/or as feature vectors or in other suitable formats. The input data sets DIS1, DIS2, DIS3 are subsequently used as input DI for the preparation step PS of the recommendation method RM. In the preparation step PS, the second artificial neural network ANN2 is applied to determine the latent representations DIS1', DIS2', and DIS3' of the provided input data sets DIS1, DIS2, DIS3. Subsequent to the preparation step PS, the recommendation step RS of the recommendation method RM is applied. In the recommendation step RS, the latent representations DIS1', DIS2', DIS3' are fed into the first artificial neural network ANN1 which provides as an output and as described above the recommended setting S(A',O(103),PA(MOT)).

As an example based on the second embodiment, a new or "unknown" customer might be willing to purchase the known product P1 and it has to be decided which discount should be offered. Like in the example of the first embodiment, the input data sets of the new customer, preferably as feature vector, of the product O=P1 and of the purchase feature PA="final price" (or "discount") are determined and fed into the second network ANN2 to calculate the latent representations. These are then forwarded to the first network ANN1 which calculates the setting or value of the requested purchase feature.

The recommendation method RM relies on tailored artificial neural networks ANN1, ANN2. Thus, those networks have to be suitably trained before they can be applied in the recommendation method RM.

The first artificial neural network ANN1 is defined by means of ANN1-parameters, e.g. weights etc. The generation of the first network ANN1 and of its parameters, respectively, includes a training phase as shown in FIG 7 with one or more training steps or loops LT(i) with i=1,2,...,N, during which the ANN1-parameters which define the behavior of the first network ANN1 as a response to an input are adjusted.

In each loop LT(i), in a first step TS1 known input information representing a particular known first variable A(i), a particular known second variable O(i), and a particular known adjustable parameter PA(i) is selected. With regard to the exemplary first and second embodiments explained above, the selected particular known first variable A(i) corresponds to one of the known operating states in the first embodiment and to one of the known customers in the second embodiment, the selected particular known second variable O(i) corresponds to one of the known devices in the first embodiment and to one of the known products in the second embodiment, and the selected particular known adjustable parameter PA(i) corresponds to one of the known configuration parameters in the first embodiment and to one of the known purchase features in the second embodiment. In a second step TS2 of the loop LT(i), the selected known input information (A(i),O(i),PA(i)) is provided as input training data to the first artificial neural network ANN1. Based on that input training data the first artificial neural network ANN1 is trained in a third step TS3 of the loop LT(i) utilizing the selected known input information representing the input training data and a particular known entry S(A(i),O(i),PA(i)) in the parameter database PDB1 according to the known input information (A(i),O(i),PA(i)). The particular known entry S(A(i),O(i),PA(i)) represents on the one hand the known setting for the selected combination of the adjustable parameter PA(i), second variable O(i), and first variable A(i) and on the other hand an aspired output of the first artificial neural network ANN1 when processing the particular input training data. In this way, the ANN1-parameters can be adjusted and optimized in a generally known fashion since both the input and the corresponding aspired output of the first network ANN1 are known so that the ANN1-parameters can be determined.

In more detail, in each loop LT(i) of the training phase of the first artificial neural network ANN1 the first network ANN1 iteratively processes the provided input training data (A(i),O(i),PA(i)) and adjusts the ANN1-parameters to calculate an output of the first network ANN1 based on the provided input training data (A(i),O(i),PA(i)) as well as on the actual adjusted ANN1-parameters. Such training steps LT(i) are repeated until such output of the first network ANN1 matches best with the particular known entry or setting S(A(i),O(i),PA(i)) in the parameter database PDB1 according to the selected particular known first variable application A(i) and operating state OS or customer C, respectively, the selected particular known second variable O(i) and device DEV or product P, respectively, and the selected particular known adjustable parameter PA(i) and configuration parameter CP or purchase feature PF, respectively, i.e. according to the selected training data.

The iterative processing typically includes a plurality of iteration steps LT(i), i.e. N»1. In each iteration step LT(i) the ANN1-parameters are adjusted and the first artificial neural network ANN1 calculates the output based on the known selected training data and the actual adjusted ANN1-parameters, i.e. original ANN1-parameters in the very first loop LT(0) or ANN1-parameters adjusted in the preceding iteration step LT(i-1). The output is then compared to the respective entry S(A,O,PA) in the parameter database. The condition that the iteration is conducted "until" the output "matches best" with the particular known entry means on the one hand that a difference between the output and the entry is below a given threshold, e.g. 2%, and on the other hand that the iterative process is ended when that condition is achieved and the ANN1-parameters applied in that iteration step are assumed to be the adjusted ANN1-parameters.

The particular first variable, the particular second variable, and the particular adjustable parameter are selected in the training phase only in combinations (A,O,PA) with each other for which a particular setting S(A,O,PA) is known and available in the parameter database PDB1 and which have, correspondingly, a concrete representation in the parameter database PDB1. In other words, in case of a combination A,O,S for which a setting of the adjustable parameter is not available and not known in the parameter database PDB1, such combination is not used for training the first artificial neural network ANN1.

The training of the independent artificial neural networks ANN2_k follows the scheme shown in FIG 7 and is conducted as generally known in the state of the art and in general similar to the training phase of the first network ANN1 as described above, i.e. in the form of some iterative processing. Each one of the networks ANN2_k is defined by means of corresponding ANN2_k-parameters, e.g. weights etc. The generation of the networks ANN2_k and of its parameters, respectively, includes a training phase with one or more training steps or loops LT(i) during which the respective ANN2_k-parameters which define the behavior of the networks ANN2_k as a response to an input are adjusted.

I.e. in short and for the sake of completeness, known input data sets DISk, still with k=1,2,...,N_ANN2, are selected in step TS1 and are used as input for ANN2_k in step TS2 and known latent representations DISk' of those input data sets DISk are provided as aspired outputs DISk' of each of the networks ANN2_k. Such known input data sets DISk and known latent representations DISk' of those known input data sets DISk can be arranged in a corresponding database PDB2 which can then be utilized to train then second network ANN2.

The iterative processing typically includes a plurality of iteration steps and is conducted until the output of ANN2_k as calculated in step TS3 matches best with the aspired latent representation DISk'. In each iteration step LT(i) the ANN2_k-parameters are adjusted and the ANN2_k calculates the output based on the known input data DISk and the actual adjusted ANN2_k-parameters, i.e. original ANN2_k-parameters in the very first loop or ANN2_k-parameters adjusted in the preceding iteration step. The output is then compared to the provided, aspired latent representation DISk'.

For the generation and training of the second artificial neural network ANN2 before the application of ANN2 for the calculation of the latent representations a previously generated further parameter database PDB2 is used. That database PDB2 is -for example- representable as an at least two-dimensional tensor, including for each type TDSk of data sets a first dimension according to the respective type TDSk of data sets, such that input data sets DISk according to the respective type TDSk of data sets are listed along the first dimension, and a second dimension according to latent features of the respective type TDSk of data sets. Thus, a series of entries in the further parameter database PDB2 assigned to and according to a particular input data set DISk provides a latent representation DISk' of that known input data set DISk.

Therein, the further parameter database PDB2 can be a common database for all types TDSk of data sets or it can be understood as an umbrella term for a number N_DIS of sub-databases, wherein each sub-database contains the data and entries, respectively, for one of the types TDSk of data sets. Consequently, such a sub-database could be two-dimensional with the first and second dimension as described above. In more detail, the second parameter database PDB2 can comprise for each input data set DIS1, DIS2, DIS3 a respective first, second, and third sub-database PDB2-1, PDB2-2, PDB2-3. The respective sub-database PDB2-1 includes a first dimension according to the known first variables and input data set DIS1 and a second dimension according to first features of the known first variables and latent representations DIS1', respectively, wherein a respective characteristic combination of first features DIS1' is assigned to each known first variable DIS1 and wherein each first variable DIS1 is representable by that characteristic combination of first features DIS1'. Correspondingly, the second PDB2-2 and the third sub-databases PDB2-3 comprise two corresponding dimensions representing known DIS2, known DIS2' and known DIS3, known DIS3', respectively.

The generation of the second artificial neural network ANN2 includes a training phase with one or more training loops LT2(i) for each one of the types TDSk of data sets during which ANN2-parameters, e.g. weights etc., which define the behavior of the second artificial neural network ANN2 as a response to an input are adjusted. In each training loop LT2(i) for a type TDSk of data sets known input information representing a particular known input data set DISk from the respective type TDSk of data sets is selected. The selected known input information DISk is provided as input training data to the second artificial neural network ANN2 which is then trained utilizing both the selected known input information DISk representing the input training data and a particular known series of entries in the second parameter database PDB2 according to and assigned to the selected known input information DISk, i.e. the selected particular known first input data set application A, the selected particular known second input data set object O, and the selected particular known adjustable parameter PA. The particular known series of entries represents an aspired output DISk' of the second artificial neural network ANN2 when processing the particular input training data DISk.

In more detail, in each step of the training phase of the second artificial neural network ANN2 the second artificial neural network ANN2 iteratively processes the provided input training data DISk, i.e. the selected known characterizing combination of first or second features, respectively, and adjusts the ANN2-parameters to calculate an output DISk' based on the provided input training data DISk and on the actual adjusted ANN2-parameters until such output DISk' of the second artificial neural network ANN2 matches best with the latent representation DISk' previously provided for the input training data DISk provided in that particular step of the training phase for the respective type TDSk of data sets. The particular meanings of "until" and "matches best" in this context have been explained earlier and are applicable here as well.

In the following, further technical background and a summary about the applied approach is provided, at least partly with reference to FIG 8.

In the invention, the database PDB1 is organized by a sparse three-way tensor, from which the latent representations DISk' for each entity A, O, PA, e.g. operating state, device, configuration parameter in the first embodiment and customer, product group, purchase feature in the second embodiment, are learned. A tensor PDB1 formed from these latent representations DISk' or the underlying data DISk contains information about the interaction behaviors among the entities and is exploited to build the recommendation method for recommending the setting S. This approach enjoys the advantage of lower dimension and higher information content, which enables the recommendation method to learn faster. A second advantage lies in the fact that with a Gaussian process as recommendation method in ANN1, one can provide the (un-)certainty of the prediction and recommendation, respectively, allowing the user to make better decisions based on the recommendation. Thirdly, the latent representations of similar entities are expected to demonstrate a high similarity in the latent space. One can derive the most similar entities, e.g. the most similar operating states and customers, respectively. It should be noted that, depending on the application, the tensor PDB1 might contain a large number of missing values since values are not available for a large number of combinations of A, O, and PA. This issue is addressed by means of the introduced decomposition of the tensor PDB1. Since a specific operating state often only applies a limited number of devices and, correspondingly, a certain customer is often only interested in a small cluster of products, the advantage of the decomposition approach lies in its ability to handle the high sparsity in the tensor PDB1 quite efficiently. The decomposition, in the scenario shown here, is realized by the combined multiway neural network consisting of the first ANN1 and the second artificial neural network ANN2.

The recommendation method RM essentially consists of two steps, namely the preparation step PS and the recommendation step RS, which steps apply the concepts of representation learning and predictive modeling, respectively. The rationale is the fact that especially the raw features to describe an operating state or a customer, a device or a product group is extremely sparse and high-dimensional and therefore only limitedly efficient, but nevertheless functional, to serve as input to predictive models. In one scenario of the demonstrated approach a continuous and latent representation is learned for at least one of the operating state, customer, device, product, configuration parameter and/or purchase behavior, which is more dense in information but smaller in size.

At least with regard to the first network ANN1 and the recommendation step RS, respectively, it has been mentioned that preferably a Gaussian process (GP) is applied, i.e. the use of a Gaussian process GP is one advantageous realization approach for the first artificial neural network ANN1.

Gaussian processes are a class of models that generates prediction uncertainty alongside point estimates via its kernel function KR1, KR2, KR3, which measures the similarity between data samples, e.g. based on a covariance matrix COV which is filled and trained, respectively, during the corresponding training phase of the first network ANN1 as described above. Therein, the very basic principle of recommending or predicting a setting S applies the assumption that for a similar combination of input data sets DISk, preferably as latent representations DISk', a similar setting S should be applied. While Gaussian processes are primarily used to solve a wide range of supervised modelling tasks, they can also be applied to perform probabilistic matrix decomposition with a focus on dimensionality reduction, via the "Gaussian Process Latent Variable Model" (GPLVM). Here, a Gaussian process is used as a prior distribution for a function that maps a lowdimensional latent space, e.g. as applicable for DI', to the high-dimensional data matrix. The individual components of this mapping function are modelled as independent draws from a Gaussian process, assuming all dimensions of the data matrix, e.g. PDB1, are independent. This independence assumption is challenging in the context of collaborative filtering, where modelling the interdependency of both users and items has proven beneficial. While GPLVM has been used as matrix factorization method for collaborative filtering in the past as for other matrix decomposition approaches, practical applicability can be limited also for computational reasons. Being designed primarily as a dimensionality reduction method for data with few missing values, it is not amenable to the triple-based learning paradigm that facilitates efficient modeling of large and highly sparse datasets and typically requires storing the dense data matrix in memory.

However, in this invention a novel approach to combine multi-output Gaussian processes GP in the recommendation step RS with representation learning for collaborative filtering via matrix decomposition in the preparation step PS is introduced. Preferably, latent representations DIS1', DIS2', DIS3' are learned in the preparation step PS jointly with a multi-output GP in the recommendation step RS that can predict, besides the point estimate of the user-item interaction, i.e. the setting S, also its predictive variance. This design is motivated by connections to coregionalization with separable kernels or kernel functions KR1, KR2, KR3 in multi-output Gaussian processes GP as well as to the GPLVM.

In more detail and with closer reference to the invention, a GP based model is established in the recommendation step RS for probabilistic prediction of the requested setting S for the adjustable parameter PA. To this end, a multi-output Gaussian process GP is trained with the input being a multi-dimensional latent representation DI' of the input data sets DISk. For example, the multiple outputs of the model correspond to device specific configuration settings or product specific purchase features and are modelled using coregionalisation over configuration parameter- or discount-groups or other adjustable parameters. Latent representations DISk' can be generated using an independently trained latent variable model in the preparation step PS via ANN2, such as probabilistic PCA, Bayesian group factor analysis (allowing for a large fraction of missing values) or tensor factorization approaches. Alternatively, deep kernel learning could be used to train an end-to-end model, mapping, for example, operating state features as well as device features or customer features as well as purchase features through a neural network consisting of a number of parametric hidden layers followed by a hidden layer with an infinite number of basis functions which might be parameterized by kernel hyperparameters. In this latter case, kernel KR1, KR2, KR3 hyperparameters and weights of the neural network can be learnt in an end-to-end fashion by maximizing the marginal likelihood of the Gaussian process. In summary, the Gaussian process GP model models a set of correlated outputs S, e.g. settings of configuration parameters for various devices or discounts for various products, based on a set of correlated inputs, e.g. multi-dimensional latent operating state or customer representations.

Regarding the aspect of collaborative filtering, this approach provides a powerful solution to such recommender systems. Referring, as an example, to the second embodiment, recommending a new item and a setting S, respectively, is based on the assumption that customers and users, respectively, demonstrating similar rating or purchasing patterns are interested in similar items. The database PDB1 describes such user-item interactions, where each entry S describes the interaction between one user and one item. The overall rating or purchasing pattern of a user can therefore be described by the corresponding row in such the tensor PDB1. However, since there are typically large numbers of users and items in the database, and each user is usually only interested in a small subset of items, this user-item tensor is often large and sparse. It can be inefficient to define the similarity between users in the high dimensional feature space defined by all items. Instead, it is more advantageous to derive the abstract feature vectors introduced above to represent users and items, which motivates the replacement of the exemplary one-hot vectors by the feature vectors and which generally inspired a wide variety of low-rank tensor decomposition models such as non-negative matrix decomposition, biased matrix decomposition and non-parametric decomposition. These methods aim at learning low dimensional representations for all users and items, allowing for the prediction of the unobserved interaction between a new pair of user and item.

The high dimensionality and sparsity of the observed data become even more challenging if the observed data are represented by a tensor, e.g. PDB1 as introduced. The tensor PDB1 is used to describe the adjacency of entities in a knowledge graph, or different aspects of a user's interaction with an item. In order to predict the existence of an unobserved entry, scalable tensor decomposition methods are known, e.g. "RESCAL", "TransE", and multi-way neural networks. These tensor decomposition methods, originally designed for sparse 3-way tensors, can be also adapted to 2-way matrix cases, which enables building large recommender systems, as well as to model non-linear interactions. Most of these representation learning methods in form of matrix and tensor decomposition, however, focus on point estimates and do not quantify any predictive uncertainty, limiting the applicability of these methods in safety-critical situations.

The introduced examples which execute the recommendation method RM, i.e. the central control unit 110 in the first embodiment or regular computer of the company offering the products in the second embodiment are only exemplary solutions. In general and still exemplary, such units may be realised as any devices, or any means, for computing, in particular for executing a software, an app, or an algorithm. For example, the unit may comprise a central processing unit (CPU) and a memory operatively connected to the CPU. The unit may also comprise an array of CPUs, an array of graphical processing units (GPUs), at least one application-specific integrated circuit (ASIC), at least one field-programmable gate array, or any combination of the foregoing. The unit may comprise at least one module which in turn may comprise software and/or hardware. Some, or even all, modules of the units may be implemented by a cloud computing platform.

While the present invention has been described above by reference to various embodiments, it should be understood that many changes and modifications can be made to the described embodiments. It is therefore intended that the foregoing description be regarded as illustrative rather than limiting, and that it be understood that all equivalents and/or combinations of embodiments are intended to be included in this description. Thus, the invention is not restricted to the above illustrated embodiments but variations can be derived by a person skilled in the art without deviation from the scope of the invention.

## Claims

1. A computer implemented recommendation method RM for providing a recommended setting S for an adjustable parameter PA,
wherein
- in a first step of the recommendation method RM an input data DI is received comprising at least a first DIS1, a second DIS2, and a third input data set DIS3, wherein
-- the third input data set DIS3 corresponds to a third type TDS3 of data sets and includes the parameter PA to be adjusted,
-- the second input data set DIS2 corresponds to a second type TDS2 of data sets and includes an object O for which the parameter PA is to be adjusted, and
-- the first input data set DIS1 corresponds to a first type TDS1 of data sets and includes an application A of the object O,
- the recommendation method RM comprises a preparation step PS and a subsequent recommendation step RS, wherein the recommendation step RS provides as an output the recommended setting S of the adjustable parameter PA,
and wherein
- the recommendation method RM applies a recommender system using a machine learning process preferably based on a collaborative filtering approach which utilizes the input data DI to calculate the recommended setting S as the output.

2. The method according to claim 1, wherein the preparation step PS applies a representation learning RL concept to produce an output DI' from the input data DI and/or the recommendation step RS applies a predictive modeling concept on the output DI' of the preparation step PS to calculate the recommended setting S as the output of the recommendation method RM.

3. The method according to claim 2, wherein the recommendation method RM is a combination of a Gaussian process GP in the recommendation step RS with the representation learning RL concept, preferably for collaborative filtering via matrix decomposition, in the preparation step PS.

4. The method according to any one of claims 1 to 3, wherein the recommendation method RM for providing the recommended setting S applies in the recommendation step RS a previously generated first artificial neural network ANN1, wherein the input data DI or representations DI' of the input data DI are processed in the recommendation step RS of the recommendation method RM to calculate the recommended setting S, wherein the calculation of the recommended setting S is executed in the recommendation step RS by means of the first artificial neural network ANN1.

5. The method according to claim 4, wherein in the recommendation step RS a Gaussian process is applied by the first artificial neural network ANN1 to calculate the recommended setting S.

6. The method according to any one of claims 1 to 5, wherein
- in the preparation step PS each one of the first DIS1, the second DIS2, and the third DIS3 input data sets of the input data DI is processed to calculate a corresponding first DIS1', second DIS2', and third DIS3' latent representation of the respective first DIS1, second DIS2, and third DIS3 input data sets, and
- the first DIS1', the second DIS2', and the third DIS3' latent representations are used as the representations DI' of input data DI in the recommendation step RS of the recommendation method RM to calculate the recommended setting S.

7. The method according to claim 6, wherein the calculations of the latent representations DISk' (k=1,2,...N_DIS) of the input data sets DISk in the preparation step PS are executed by means of a previously generated second artificial neural network ANN2.

8. The method according to any one of claims 1 to 7, wherein for the generation of the first artificial neural network ANN1 a previously generated parameter database PDB1 is used, wherein the parameter database PDB1 is representable as a multi-dimensional tensor, including at least a first, a second, and a third dimension, with
- the third dimension z according to the third type TDS3 of data sets and adjustable parameters PA, respectively,
- the second dimension y according to the second type TDS2 of data sets and objects O, respectively, for which the parameters PA are adjustable,
- the first dimension x according to the first type TDS1 of data sets and applications A, respectively,
wherein an entry at particular (i) coordinates xi, yi, zi in the tensor represents a previously known setting S(xi,yi,zi) of a particular adjustable parameter zi=PA for a particular second input data set yi=O and for a particular first input data set xi=A.

9. The method according to claim 8, wherein a tensor decomposition model is applied on the parameter database PDB1.

10. The method according to any one of claims 8 to 9, wherein the generation of the first artificial neural network ANN1 includes a training phase with one or more training loops LT(i), during which ANN1-parameters which define the first artificial neural network ANN1 are adjusted, wherein in each training loop LT(i)
- known input information representing a particular known first input data set DIS1, a particular known second input data set DIS2, and a particular known adjustable parameter DIS3=PA are selected,
- the selected known input information DIS1, DIS2, DIS3 is provided as input training data to the first artificial neural network ANN1,
- the first artificial neural network ANN1 is trained utilizing
-- the selected known input information representing the input training data and
-- a particular known entry S(A,O,PA) in the parameter database according to the selected known input information, the particular known entry S(A,O,PA) representing an aspired output of the first artificial neural network ANN1 when processing the particular input training data.

11. The method according to claim 7, wherein for the generation of the second artificial neural network ANN2 a previously generated further parameter database PDB2 is used, wherein the further parameter database PDB2 is representable as an at least two-dimensional tensor, including for each type TDSk of data sets
- a first dimension according to the respective type TDSk of data sets, and
- a second dimension according to latent features of the respective type TDSk of data sets,
- such that entries in the further parameter database PDB2 assigned to and according to a particular input data set DISk provides a latent representation DISk' of that known input data set DISk.

12. The method according to claim 11, wherein the generation of the second artificial neural network ANN2 includes a training phase with one or more training loops LT2(i) for each one of the types TDSk of data sets during which ANN2-parameters which define the second artificial neural network ANN2 are adjusted, wherein in each training loop LT2(i) for a type TDSk of data sets
- known input information representing a particular known input data set DISk from the respective type TDSk of data sets is selected,
- the selected known input information DISk is provided as input training data to the second artificial neural network ANN2,
- the second artificial neural network ANN2 is trained utilizing
-- the selected known input information DISk representing the input training data and
-- a particular known entries in the second parameter database PDB2 according to and assigned to the selected known input information DISk, the particular known entries representing an aspired output DISk' of the second artificial neural network ANN2 when processing the particular input training data DISk.

13. The method according to any one of claims 11 to 12, wherein the generation and training of the second artificial neural network ANN2 is based on a representation learning approach.

14. Recommender system for providing a recommended setting S for an adjustable parameter PA of an object O for an application A, comprising a computer configured to execute the method according to any one of claims 1 to 13.

15. Control unit (110) of a plant (100), wherein
- the plant (100) can be operated in a plurality of operating states OS,
- the control unit (110) is configured to control settings S(OS,DEV,CP) of configuration parameters CP of devices DEV of the plant (100), wherein the setting S(OS,DEV,CP) of a particular device DEV depends on an actual operating state OS of the plant, and
- the control unit (110) is configured to execute the recommendation method RM according to any one of claims 1 to 13 to determine a recommended setting S(OS,DEV,CP), wherein the configuration parameter CP of a device DEV corresponds to the adjustable parameter PA, the device DEV corresponds to the object O, and the operating state OS corresponds to the application A.
